# EUROPEAN PATENT APPLICATION

(11) **EP 4 586 245 A1**
(43) Date of publication of application: **16.07.2025**
(21) Application number: 25151045.9
(22) Date of filing: 09.01.2025
(51) Int. Cl.: G10L 15/28, G10L 15/26, B60R 16/037, G06F 3/16

(54) **"VISIBLE AND SPEAKABLE" IMPLEMENTATION METHOD AND APPARATUS, AND VEHICLE**

(30) Priority: 11.01.2024 CN 202410046952
(71) Applicant: BYD Company Limited, Shenzhen, Guangdong 518118 (CN)
(72) Inventor: XING, Fanglin, Shenzhen (CN)
(74) Representative: Wu, Ting

(57) **Abstract**

A "visible and speakable" implementation method and apparatus, and a vehicle. The method includes: receiving a voice instruction of a user, and obtaining semantic text information based on the voice instruction; obtaining a current display interface, and determining interface information of the display interface based on an information type of an application corresponding to the display interface; and outputting an execution instruction based on the interface information and the semantic text information, so as to perform an operation corresponding to the voice instruction. According to the method, the apparatus, and the vehicle, based on an information type of an application corresponding to a current display interface, interface information and an execution instruction of the display interface are obtained by using different solutions, thereby implementing diversification of an interface information obtaining manner and an instruction execution manner. A corresponding technical solution can be flexibly selected according to an actual situation, so that implementation and expansion of a "visible and speakable" service are more flexible, and are not limited to a single solution.

## Description

### FIELD

The present disclosure relates to the field of speech recognition, and more specifically, to a "visible and speakable" implementation method and apparatus, and a vehicle.

### BACKGROUND

With the rapid development of speech recognition technologies and vehicle intelligentization, voice technologies play an important role in the vehicle field, and are an indispensable part of the vehicle field nowadays. From the initial voice navigation, to today's "visible and speakable", "visible and speakable" provides a variety of new interaction methods, including vehicle control, socialization, and entertainment, "visible and speakable" means that a user only needs to say the name of a control displayed on a screen interface by voice, and does not need to touch the screen by hand to realize the purpose of controlling the interface control by voice. This eliminates the driver's focus on various settings and buttons, and enhances the user experience while ensuring driving safety.

Existing "visible and speakable" processing flow generally includes: passing interface information and hotwords of an application to a voice client, determining whether there is a "visible and speakable" intention through a natural language understanding module, and executing an instruction to manipulate a target control when a "visible and speakable" intention exists. However, the existing technology to realize the intelligent voice "visible and speakable" solution is too single, but also requires large development costs, and cannot achieve effective "visible and speakable" control of an application.

### SUMMARY

The present disclosure is proposed to resolve the foregoing problem. According to one aspect of the present disclosure, a "visible and speakable" implementation method is provided, where the method includes: receiving a voice instruction of a user, and obtaining semantic text information based on the voice instruction; obtaining a current display interface, and determining interface information of the display interface based on an information type of an application corresponding to the display interface; and outputting an execution instruction based on the interface information and the semantic text information, so as to perform an operation corresponding to the voice instruction.

In an embodiment of the present disclosure, the determining interface information of the display interface based on an information type of an application corresponding to the display interface includes: determining whether the information type of the application corresponding to the display interface is a first-type application or a second-type application, where the first-type application is a "visible and speakable" application implemented by using a preset software development kit, and the second-type application is a "visible and speakable" application implemented by using a system service; obtaining the interface information from the display interface in a first information obtaining manner when the information type of the application corresponding to the display interface is the first-type application; and obtaining the interface information from the display interface in a second information obtaining manner when the information type of the application corresponding to the display interface is the second-type application.

In an embodiment of the present disclosure, the outputting an execution instruction based on the interface information and the semantic text information, so as to perform an operation corresponding to the voice instruction includes:

matching the semantic text information against the interface information when the information type of the application corresponding to the display interface is the first-type application, and after the matching succeeds, outputting a first execution instruction, so as to perform the operation corresponding to the voice instruction; and matching the semantic text information against the interface information when the information type of the application corresponding to the display interface is the second-type application, and after the matching succeeds, outputting a second execution instruction, so as to perform the operation corresponding to the voice instruction.

In an embodiment of the present disclosure, the method further includes: determining, before it is determined whether the information type of the application corresponding to the display interface is the first-type application or the second-type application, whether the application corresponding to the display interface is an application in a preset whitelist; and determining, after it is determined that the application corresponding to the display interface is an application in the preset whitelist, whether the information type of the application corresponding to the display interface is the first-type application or the second-type application; where an application in the preset whitelist is a "visible and speakable" application.

In an embodiment of the present disclosure, each application in the preset whitelist includes a label, and the label is used to identify that the application is the first-type application or the second-type application; and the determining whether the information type of the application corresponding to the display interface is a first-type application or a second-type application includes: determining, based on the label of each application in the preset whitelist, whether the information type of the application corresponding to the display interface is the first-type application or the second-type application.

In an embodiment of the present disclosure, the preset whitelist is deployed in a cloud or locally, and the preset whitelist is editable.

In an embodiment of the present disclosure, the obtaining the interface information from the display interface in a first information obtaining manner includes: obtaining the interface information of the display interface by using a software development kit of the application corresponding to the display interface; and the outputting a first execution instruction, so as to perform the operation corresponding to the voice instruction includes: outputting an execution instruction to the application corresponding to the display interface, so that the application corresponding to the display interface performs the operation corresponding to the voice instruction.

In an embodiment of the present disclosure, the obtaining the interface information from the display interface in a second information obtaining manner includes: obtaining the interface information of the display interface by using an accessible auxiliary service of a system service in which the display interface is located; and the outputting a second execution instruction, so as to perform the operation corresponding to the voice instruction includes: outputting an execution instruction to the accessible auxiliary service of the system service in which the display interface is located, so that the accessible auxiliary service performs the operation corresponding to the voice instruction.

In an embodiment of the present disclosure, the method further includes: determining, when the display interface presents interfaces of at least two applications, for an information type of each of the at least two applications whether the application is the first-type application or the second-type application.

According to another aspect of the present disclosure, a "visible and speakable" implementation apparatus is provided, where the apparatus includes a processor and a memory, the memory storing a computer program run by the processor, and when the computer program is run by the processor, the processor performing the foregoing "visible and speakable" implementation method.

According to still another aspect of the present disclosure, a vehicle is provided, where the vehicle includes the foregoing "visible and speakable" implementation apparatus.

According to another aspect of the present disclosure, a storage medium is provided, where the storage medium stores a computer program run by a processor, and when the computer program is run by the processor, the processor performing the foregoing "visible and speakable" implementation method.

According to an embodiment of the present disclosure, a "visible and speakable" implementation method is provided according to claim 1. According to an embodiment of the present disclosure, a vehicle, comprising the "visible and speakable" implementation apparatus is provided according to claim 11. According to an embodiment of the present disclosure, a storage medium, storing a computer program run by a processor, and when the computer program is run by the processor, the processor performing the "visible and speakable" implementation method is provided according to claim 12.

According to the "visible and speakable" implementation method and apparatus, and the vehicle of the present disclosure, based on an information type of an application corresponding to a current display interface, interface information and an execution instruction of the display interface are obtained by using different solutions, thereby implementing diversification of an interface information obtaining manner and an instruction execution manner. A corresponding technical solution can be flexibly selected according to an actual situation, so that implementation and expansion of a "visible and speakable" service are more flexible, and are not limited to a single solution.

### BRIEF DESCRIPTION OF THE DRAWINGS

By describing in more detail the embodiments of the present disclosure with reference to the accompanying drawings, the foregoing and other objects, features, and advantages of the present disclosure will become clearer. The accompanying drawings are used to provide a further understanding of the embodiments of the present disclosure, constitute a part of the specification, and are used together with the embodiments of the present disclosure to explain the present disclosure, which does not constitute a limitation on the present disclosure. In the accompanying drawings, the same reference numerals typically represent the same component or step.
FIG. 1 is a schematic block diagram of an example electronic device used to implement a "visible and speakable" implementation method and apparatus according to an embodiment of the present disclosure.
FIG. 2 is a schematic flowchart of a "visible and speakable" implementation method according to an embodiment of the present disclosure.
FIG. 3 is a schematic diagram of a "visible and speakable" application-level and system-level combination solution according to an embodiment of the present disclosure.
FIG. 4 is a schematic structural block diagram of a "visible and speakable" implementation apparatus according to an embodiment of the present disclosure.

### DETAILED DESCRIPTION

To make the objectives, technical solutions, and advantages of the present disclosure clearer, the following describes in detail the example embodiments according to the present disclosure with reference to the accompanying drawings. Clearly, the described embodiments are merely some but not all of the embodiments of the present disclosure. It should be understood that, the present disclosure is not limited by the example embodiments described herein. Based on the embodiments of the present disclosure described in the present disclosure, all other embodiments obtained by a person skilled in the art without creative efforts fall within the protection scope of the present disclosure.

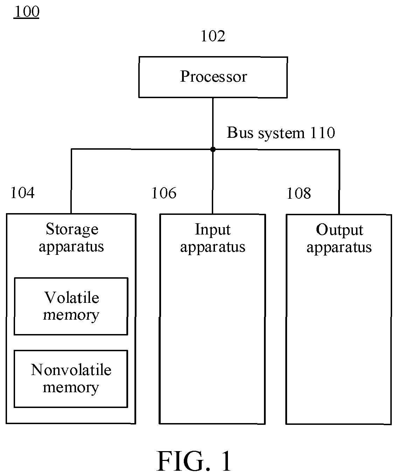

First, referring to FIG. 1, an example electronic device 100 used to implement a "visible and speakable" implementation method and apparatus according to embodiments of the present disclosure is described.

As shown in FIG. 1, the electronic device 100 includes one or more processors 102, one or more storage apparatuses 104, an input apparatus 106, and an output apparatus 108. These components are interconnected by using a bus system 110 and/or another form of a connection mechanism (not shown). It should be noted that the components and structures of the electronic device 100 shown in FIG. 1 are merely exemplary, but are not limiting. The electronic device may also have other components and structures as required.

The processor 102 may be a central processing unit (CPU) or another form of processing unit having a data processing capability and/or an instruction execution capability, and may control other components in the electronic device 100 to perform desired functions.

The storage apparatus 104 may include one or more computer program products, and the computer program product may include various forms of computer readable storage media, such as a volatile memory and/or a non-volatile memory. For example, the volatile memory may include a RAM and/or a cache. For example, the non-volatile memory may include a ROM, a hard disk, or a flash memory. One or more computer program instructions may be stored on the computer readable storage medium, and the processor 102 may run the program instructions to implement a client function and/or another desired function (implemented by the processor) in the following embodiments of the present disclosure. The computer readable storage medium may further store various application programs and various data, for example, various data used and/or generated by the application program.

The input apparatus 106 may be an apparatus used by a user to input an instruction, and may include one or more of a keyboard, a mouse, a microphone, a touchscreen, and the like. In addition, the input apparatus 106 may alternatively be any interface for receiving information.

The output apparatus 108 may output various types of information (e.g., images or sounds) to the outside (e.g., the user), and may include one or more of a display, a speaker, and the like. In addition, the output apparatus 108 may alternatively be any other device having an output function.

For example, the example electronic device used to implement the "visible and speakable" implementation method and apparatus according to the embodiments of the present disclosure may be implemented in, for example, an intelligent in-vehicle terminal, smart home, and intelligent education.

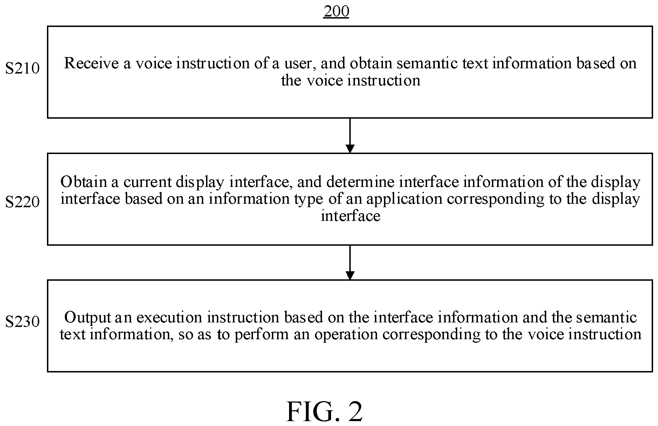

The following describes a "visible and speakable" implementation method 200 according to an embodiment of the present disclosure with reference to FIG. 2. FIG. 2 is a schematic flowchart of a "visible and speakable" implementation method 200 according to an embodiment of the present disclosure. As shown in FIG. 2, the "visible and speakable" implementation method 200 according to this embodiment of the present disclosure may include the following steps:

In step S210, a voice instruction of a user is received, and semantic text information is obtained based on the voice instruction.

In step S220, a current display interface is obtained, and interface information of the display interface is determined based on an information type of an application corresponding to the display interface.

In step S230, an execution instruction is output based on the interface information and the semantic text information, so as to perform an operation corresponding to the voice instruction.

In this embodiment of the present disclosure, the voice instruction of the user is first received. When voice is activated, the current display interface is obtained, and the information type of the application corresponding to the display interface is determined by using the obtained display interface. For different applications, manners of obtaining the interface information and manners of executing the instruction are different. In this embodiment of the present disclosure, it may be determined whether the application is a first-type application or a second-type application. The first-type application is an application that implements "visible and speakable" by using a preset software development kit (SDK), and is also referred to as an application-level application, or an application that uses an application-level solution in this specification. The second-type application is an application that implements "visible and speakable" by using a system service, and is also referred to as a system-level application, or an application that uses a system-level solution in this specification.

When it is determined that the application corresponding to the display interface is the first-type application, the application uses an application-level solution to obtain the interface information of the display interface in a first information obtaining manner (for example, by using a software development kit of the application). When it is determined that the application corresponding to the display interface is the second-type application, the application uses a system-level solution to obtain the interface information of the display interface in a second information obtaining manner (for example, an accessible auxiliary service of a system service in which the display interface is located). In a further embodiment, for some applications, an application-level solution and a system-level solution may alternatively be used by a same application to obtain more complete interface information. The semantic text information is obtained by performing semantic conversion on the voice instruction based on the obtained voice instruction of the user by means of automatic speech recognition, the semantic text information is matched against the interface information of the display interface, and when the semantic text information matches the interface information of the display interface (that is, there is a "visible and speakable" intention), an execution instruction is output.

When it is determined that the application corresponding to the display interface is the first-type application, a first execution instruction is output, and the first execution instruction may instruct, for example, the application corresponding to the display interface to perform the operation corresponding to the voice instruction. When it is determined that the application corresponding to the display interface is the second-type application, a second execution instruction is output, and the second execution instruction may instruct, for example, the accessible auxiliary service of the system service to perform the operation corresponding to the voice instruction.

Therefore, according to the "visible and speakable" implementation method 200 of the present disclosure, based on an information type of an application corresponding to a current display interface, interface information and an execution instruction of the display interface are obtained by using different solutions, thereby implementing diversification of an interface information obtaining manner and an instruction execution manner. A corresponding technical solution can be flexibly selected according to an actual situation, so that implementation and expansion of a "visible and speakable" service are more flexible, and are not limited to a single solution.

In this embodiment of the present disclosure, in step S210, the voice instruction of the user is received, and the semantic text information is obtained based on the voice instruction. First, the voice instruction of the user may be collected by using a voice end, for example, some voice instructions such as "open the skylight", "play the next song", and "open map navigation". Then, voice front-end signal processing needs to be performed on the received voice instruction, and the voice instruction obtained after the front-end signal processing is transmitted to an automatic speech recognition module. Finally, the voice instruction obtained after the front-end signal processing is converted into the semantic text information by using the automatic speech recognition module.

In this embodiment, the voice front-end signal processing refers to performing related processing on the collected voice instruction of the user, so that the processed voice can better represent an essential feature of the voice. The voice front-end signal processing is composed of subfunctions such as endpoint detection, noise suppression, wakeup, and echo cancellation to accurately determine a start point of a voice signal and then detect a valid voice segment from a continuous voice stream. Noise suppression, also known as noise reduction, is necessary in the voice front-end signal processing because an actually collected audio usually has background sounds with a certain intensity, which are generally background noise, and when the intensity of the background noise is large, it will have a significant impact on effects of a voice application, such as a decrease in a speech recognition rate and a decrease in sensitivity of endpoint detection. A key to noise suppression is to extract a noise spectrum, and then perform an inverse compensation operation on noise-containing voice according to the noise spectrum, so as to obtain noise-reduced voice. The wakeup is, for example, wakeup by a wakeup word of "Hello, Xiao Di". The wakeup word is recognized and collection and processing of audio signal data are started. Echo cancellation refers to removing a sound recorded by the device's microphone, which is generated by the device itself, and removing it cleanly with an algorithm. For example, "Hello, Xiao Di" wakes up the device, and the device responds with "Hello" using a text to speech (TTS) technology. The device takes in its own "hello" from the microphone, and if the device itself does not do a good job in echo cancellation, the device thinks the user is saying "hello" to it. After receiving the fake "Hello", the machine will respond with "Hello" politely according to the product design. In this way, the device keeps saying "Hello" to talk with itself. Therefore, by means of the voice front-end signal processing, a signal obtained by subsequent voice processing may be more uniform and smoother, which reduces difficulty of back-end speech recognition or voice wakeup, and improves voice processing quality.

In this embodiment, the voice instruction obtained after the front-end signal processing needs to be converted into the semantic text information by means of speech recognition. The voice instruction may be converted by using an automatic speech recognition (ASR) technology, or may be converted into a semantic text by using another suitable speech recognition, which is not specifically limited herein. Automatic speech recognition can convert a natural voice signal into machine recognizable text information. Because the voice instruction of the user obtained in an actual case cannot be recognized and read by the machine, the voice instruction needs to be converted into a machine readable language. Therefore, automatic speech recognition is used to complete conversion of the voice instruction. Automatic speech recognition mainly includes the following steps: First, feature extraction is performed, and a feature vector is extracted from the voice instruction obtained after the front-end signal processing, where the feature vector may reflect features such as rhythm, pitch, and timbre of the voice. Then, acoustic modeling is performed, and the feature vector is modeled by using an acoustic model, and the feature vector is mapped to a phoneme level, and then is mapped to a word level. A language model is established again, and the language model is used to impose linguistic constraints on the text converted from the speech to make the output text more linguistically idiomatic. Then, recognition is performed, and a feature vector processed by using the acoustic model and the language model is compared with a pre-trained word library to output the most matched text. Finally, post-processing is performed, and post-processing operations such as syntax correction and punctuation processing are performed on the output text, so that the output text is more consistent with human language expression habits. Therefore, after automatic speech recognition processing is performed, it is possible to convert the speech into a text, understand the semantic information of the speech, convert the text into speech, and apply scenario communication, which facilitates human-to-human communication and at the same time promotes human-machine communication.

In this embodiment of the present disclosure, in step S220, the obtaining a current display interface, and determining interface information of the display interface based on an information type of an application corresponding to the display interface includes: determining whether the information type of the application corresponding to the display interface is a first-type application or a second-type application, where the first-type application is a "visible and speakable" application implemented by using a preset software development kit, and the second-type application is a "visible and speakable" application implemented by using a system service; determining, before it is determined whether the information type of the application corresponding to the display interface is the first-type application or the second-type application, whether the application corresponding to the display interface is an application in a preset whitelist; and determining, after it is determined that the application corresponding to the display interface is an application in the preset whitelist, whether the application corresponding to the display interface is the first-type application or the second-type application; where an application in the preset whitelist is a "visible and speakable" application. A main function of the whitelist includes: determining, by using the preset whitelist, which applications support a "visible and speakable" function; determining, by using the whitelist, whether the application in the current display interface is the first-type application or the second-type application, where the first-type application uses an application-level solution, and the second-type application uses a system-level solution.

In this embodiment, a determining rule set for the preset whitelist is to determine whether the application of the current display interface is in the preset whitelist; if the application is in the preset whitelist, it may be determined that the application is the first-type application and uses an application-level solution; and if the application is not in the preset whitelist, it may be determined that the application is the second-type application, and uses a system-level solution. Certainly, the application in the preset whitelist may be set as the second-type application, which uses a system-level solution. This is not specifically limited. For example, applications such as Amap Car Edition and Fusion Music are in the preset whitelist, and these applications are integrated with a "visible and speakable" software development kit, so these applications are first-type applications and use an application-level solution. Applications such as QQ Music and NetEase Cloud Music are not in the preset whitelist and are not integrated with a "visible and speakable" software development kit, so these applications are second-type applications and use a system-level solution.

In this embodiment of the present disclosure, each application in the preset whitelist includes a label, and the label is used to identify that the application is the first-type application or the second-type application. The determining whether the application corresponding to the display interface is the first-type application or the second-type application includes: determining, based on the label of each application in the preset whitelist, whether the application corresponding to the display interface is the first-type application or the second-type application. That is, the whitelist records the label of each application, and an application attribute corresponding to the current display interface is determined by using the label. The label in the whitelist is used to identify the application, so that the application corresponding to the current display interface can be more conveniently and quickly classified, which is more advantageous to subsequent selection of an application solution.

In this embodiment of the present disclosure, the preset whitelist is deployed in a cloud or locally, and the preset whitelist is editable. The application in the preset whitelist is an application that supports "visible and speakable". Another important role of the preset whitelist is that the application in the preset whitelist can be changed at any time. The preset whitelist may be deployed in a cloud or locally, or an application may be deleted or added at any time, and a requirement for each application can be more flexibly implemented.

In this embodiment of the present disclosure, when the information type of the application corresponding to the display interface is the first-type application, the interface information is obtained from the display interface in the first information obtaining manner. When the information type of the application corresponding to the display interface is the second-type application, the interface information is obtained from the display interface in the second information obtaining manner. For some applications, an application-level solution and a system-level solution may alternatively be used by a same application to obtain more complete interface information. This is not specifically limited. Before the interface information is obtained from the display interface, the method further includes: generating a hotword by using the interface information of the current display interface to form a hotword list, and then transmitting the hotword list to automatic speech recognition to enhance the hotword.

For example, the hotword is used for enhanced recognition by providing some text content to automatic speech recognition. For example, without hotword enhancement, some brand names such as BYD, AITO, Li Auto, NIO, and XPeng are easily misrecognized by automatic speech recognition after the user says them. Therefore, these brand words need to be provided for automatic speech recognition to enhance recognition and improve recognition accuracy. The hotword in this embodiment of the present disclosure refers to an interface information text in the current display interface, where the interface information text includes a text in a picture, a control name, a text corresponding to an icon, and the like.

For example, the generating a hotword by using the interface information of the current display interface to form a hotword list includes: first performing text information extraction on the interface information of the current display interface to obtain a text information extraction result, then performing word segmentation processing based on the text information extraction result to generate a hotword to form a hotword list, and then transmitting the hotword list to automatic speech recognition to perform hotword enhancement. Word segmentation processing is performed on the text information extraction result, and a word segmentation processing result is a combination of word segmentation texts. For example, an instruction name is "chi pu tao bu tu pu tao pi, bu chi pu tao dao tu pu tao pi", and generalized expression manners after word segmentation may include "chi pu tao", "bu tu pu tao pi", "bu chi pu tao", "dao tu pu tao pi", and the like. All the expression manners may be used as hotwords corresponding to the instruction operation, and then a corresponding hotword list is formed. Therefore, uploading the hotword list can improve matching precision of speech recognition.

In this embodiment of the present disclosure, the obtaining the interface information from the display interface in a first information obtaining manner includes: obtaining the interface information of the display interface by using a software development kit of the application corresponding to the display interface; and the outputting a first execution instruction, so as to perform the operation corresponding to the voice instruction includes: outputting an execution instruction to the application corresponding to the display interface, so that the application corresponding to the display interface performs the operation corresponding to the voice instruction. According to the foregoing setting of the application in the preset whitelist, if the application corresponding to the current display interface is in the preset whitelist, it is determined that the application corresponding to the current display interface is the first-type application, and the first-type application is at an application level. Therefore, the first information obtaining manner is an application-level solution. The application-level solution is to obtain the interface information of the display interface by using the software development kit of the application corresponding to the display interface, or may be obtained by using another join development mode. For example, a voice end and an application determine an information transmission manner by means of communication. This is not specifically limited. That the interface information of the display interface is obtained by using the application-level solution is specifically as follows: First, the software development kit is provided on the voice end. The application corresponding to the current display interface needs to integrate the software development kit provided by the voice end. The interface information of the current display interface is transmitted to the voice end by using the software development kit, and then a corresponding execution instruction is output to perform a corresponding voice instruction operation.

In this embodiment, when the information type of the application corresponding to the display interface is the first-type application, the execution instruction is output based on the interface information and the semantic text information, so as to perform the operation corresponding to the voice instruction in step S230. The matching the semantic text information against the interface information obtained in the first information obtaining manner, and after the matching succeeds, outputting the first execution instruction, so as to perform the operation corresponding to the voice instruction includes: outputting an execution instruction to the application corresponding to the display interface, so that the application corresponding to the display interface performs the operation corresponding to the voice instruction. Because it is determined that the application corresponding to the current display interface is the first-type application, the first-type application is determined as being at an application level by using the preset whitelist, an application-level application executes an application-level solution, the application-level solution obtains the interface information of the display interface by using the software development kit of the corresponding application, then transmits the interface information of the display interface to a natural language understanding (NLU) layer, and then transmits semantic text information to the natural language understanding layer. Matching is performed on the two at the natural language understanding layer, and determine whether there is a "visible and speakable" intention, that is, whether the speech of the user matches the interface information of the current interface. When there is a "visible and speakable" intention, that is, the speech of the user matches the interface information of the current interface, an execution instruction is output to an instruction execution module.

For example, natural language understanding refers to a capability of a computer to understand a human natural language, and includes technologies such as speech recognition, a language model, syntax analysis, and semantic analysis. By means of natural language understanding, a "visible and speakable" intention of a voice instruction of the user can be matched, and then an execution instruction can be delivered. In this case, the first-type application is an application-level application, and uses an application-level solution. Then, the instruction module sends the instruction to the application corresponding to the display interface, and the application corresponding to the display interface performs an instruction operation, that is, the application corresponding to the display interface performs an operation corresponding to the voice instruction. For example, the voice instruction of the user is "open Amap". In this case, the application automatically opens Amap, and no any tap operation is needed, thereby improving driving safety of the user and improving user experience.

In this embodiment of the present disclosure, when the application corresponding to the display interface is the second-type application, the interface information is obtained from the display interface in the second information obtaining manner, the semantic text information is matched against the interface information, and a second execution instruction is output after the matching succeeds, so as to perform the operation corresponding to the voice instruction. Before the interface information is obtained from the display interface in the second information obtaining manner, the method further includes: generating a hotword by using the interface information of the current display interface to form a hotword list, and then transmitting the hotword list to automatic speech recognition to enhance the hotword. The generating a hotword by using the interface information of the current display interface to form a hotword list includes: first performing text information extraction on the interface information of the current display interface to obtain a text information extraction result, then performing word segmentation processing based on the text information extraction result to generate a hotword to form a hotword list, and then transmitting the hotword list to automatic speech recognition to perform hotword enhancement, so as to improve matching precision of speech recognition. Then, the interface information of the current display interface is matched against the semantic text information previously converted from the user speech, and the second execution instruction is output to perform the corresponding instruction operation.

In this embodiment of the present disclosure, the obtaining the interface information from the display interface in a second information obtaining manner includes: obtaining the interface information of the display interface by using an accessible auxiliary service of a system service in which the display interface is located; and the outputting a second execution instruction, so as to perform the operation corresponding to the voice instruction includes: outputting an execution instruction to the accessible auxiliary service of the system service in which the display interface is located, so that the accessible auxiliary service performs the operation corresponding to the voice instruction. According to the setting of the application in the foregoing preset whitelist, it may be determined that if the application corresponding to the current display interface is not in the preset whitelist, the application corresponding to the current display interface is the second-type application. The second-type application is at a system level. Therefore, the second information obtaining manner is a system-level solution. The system-level solution obtains the interface information of the display interface by using the accessible auxiliary service of the system service in which the display interface is located. The accessible auxiliary service obtains the interface information of the current display interface by scanning the current display interface, then transmits the interface information of the display interface to the natural language understanding layer, and then transmits the semantic text information to the natural language understanding layer. Matching is performed on the two at the natural language understanding layer to determine whether there is a "visible and speakable" intention, that is, to determine whether the user speech matches the interface information in the current interface. When there is a "visible and speakable" intention, that is, the user speech matches the interface information in the current interface, an execution instruction is output to the instruction execution module. Because the application corresponding to the current display interface is the second-type application, the instruction execution module performs the operation by using a "visible and speakable" system-level service, that is, performs the corresponding voice instruction by using the accessible auxiliary service.

In an embodiment of the present disclosure, the method further includes: determining, when the display interface presents interfaces of at least two applications, for an information type of each of the at least two applications whether the application is the first-type application or the second-type application. In a same screen, if there is screen splitting on the screen in this case, there is a case in which the first-type application coexists with the second-type application, that is, there is a case in which the application-level solution coexists with the system-level solution. In this case, the voice instruction of the user is first received, the front-end signal processing is performed on the voice instruction of the user, and then the speech obtained after the front-end signal processing is transmitted to automatic speech recognition to obtain the semantic text information. Then, the interface information of the display interface is obtained. Because both the application-level solution and the system-level solution exist, the interface information of the display interface is obtained by using corresponding manners of obtaining the interface information of the display interface, that is, the software development kit corresponding to the application-level solution and the accessible auxiliary service of the system service corresponding to the system-level solution. Then, the obtained interface information of the display interface is transmitted to the natural language understanding layer, and the semantic text information obtained from the voice instruction of the user is transmitted to the natural language understanding layer. Matching is performed on the two to determine a "visible and speakable" intention. When the two match, there is a "visible and speakable" intention, and an execution instruction is delivered. Finally, in the application-level solution, the application corresponding to the display interface performs the operation corresponding to the voice instruction, and in the system-level solution, the accessible auxiliary service performs the operation corresponding to the voice instruction.

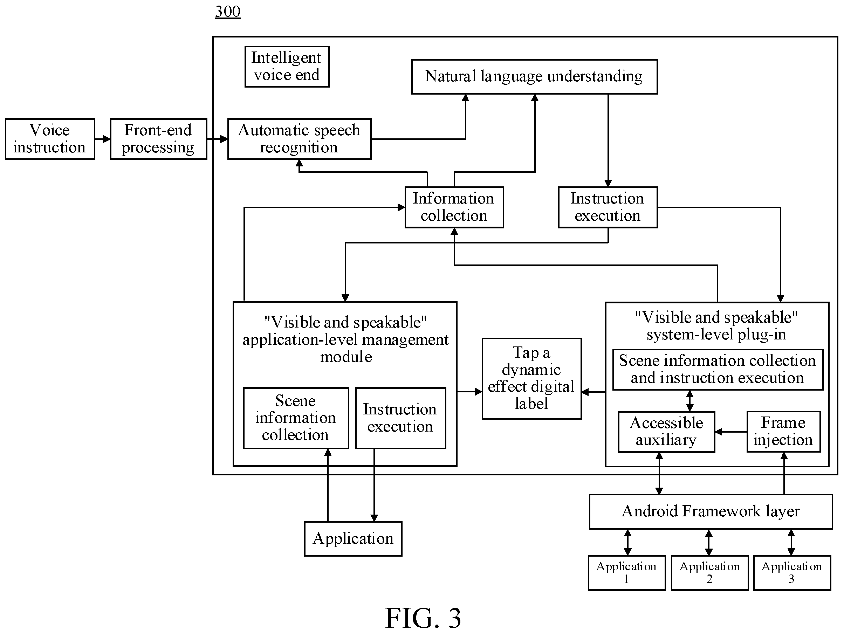

With reference to FIG. 3, the following summarizes a "visible and speakable" application-level and system-level combination solution according to an embodiment of the present disclosure. As shown in FIG. 3, the user activates the voice and starts to speak an interface text currently displayed on the screen. When the voice is activated, if the application displayed on the current interface uses an application-level solution, the application transmits the interface information and the text to an intelligent voice client APP (that is, the execution body of the method 200) by using an SDK or in another communication manner. When the voice is activated, if the application displayed on the current interface uses a system-level solution, the interface information and the text are transmitted to the intelligent voice client APP by using accessible assistance. An information collection module transmits the collected interface text to an ASR service provider, and also transmits the interface information and text to an NLU semantic layer. When a semantic algorithm layer matches a "visible and speakable" intention, an execution instruction is delivered to the instruction execution module. If the current application uses an application-level solution, the instruction execution module sends the instruction to a corresponding application. The third-party application performs a tap operation. If the current application uses a system-level solution, the instruction execution module performs an operation by using a "visible and speakable" system-level service, that is, the accessible auxiliary service performs a tap operation.

Based on the foregoing description, according to the "visible and speakable" implementation method in this embodiment of the present disclosure, based on an information type of an application corresponding to a current display interface, interface information and an execution instruction of the display interface are obtained by using different solutions, thereby implementing diversification of an interface information obtaining manner and an instruction execution manner. A corresponding technical solution can be flexibly selected according to an actual situation, so that implementation and expansion of a "visible and speakable" service are more flexible, and are not limited to a single solution.

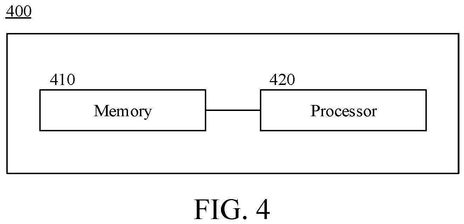

With reference to FIG. 4, the following describes a "visible and speakable" implementation apparatus according to another aspect of the present disclosure. FIG. 4 is a schematic structural block diagram of a "visible and speakable" implementation apparatus 400 according to an embodiment of the present disclosure. As shown in FIG. 4, the "visible and speakable" implementation apparatus 400 includes a memory 410 and a processor 420. The memory 410 stores a computer executable program run by the processor 420. When the computer executable program is run by the processor 420, the processor 420 is enabled to perform the "visible and speakable" implementation method 200. A person skilled in the art may understand, with reference to the foregoing content, a structure and a specific operation of each module in the "visible and speakable" implementation apparatus 400 according to an embodiment of this application. For brevity, details are not described herein again. Therefore, according to the "visible and speakable" implementation apparatus in this embodiment of the present disclosure, based on an information type of an application corresponding to a current display interface, interface information and an execution instruction of the display interface are obtained by using different solutions, thereby implementing diversification of an interface information obtaining manner and an instruction execution manner. A corresponding technical solution can be flexibly selected according to an actual situation, so that implementation and expansion of a "visible and speakable" service are more flexible, and are not limited to a single solution.

In addition, according to an embodiment of the present disclosure, a vehicle is further provided, which may include the foregoing "visible and speakable" implementation apparatus 400.

In addition, the present disclosure further provides a storage medium. The storage medium stores a computer program. When the computer program is run by a processor, the processor is enabled to perform the foregoing "visible and speakable" implementation method according to the embodiment of this application. The storage medium may include, for example, a storage card of a smartphone, a storage component of a tablet computer, a hard disk of a personal computer, a read-only memory (ROM), an erasable programmable read-only memory (EPROM), a portable compact disc read-only memory (CD-ROM), a USB memory, or any combination of the foregoing storage media. The computer readable storage medium may be any combination of one or more computer readable storage media.

Based on the foregoing description, according to the "visible and speakable" implementation method and apparatus and the vehicle in the embodiments of the present disclosure, based on an information type of an application corresponding to a current display interface, interface information and an execution instruction of the display interface are obtained by using different solutions, thereby implementing diversification of an interface information obtaining manner and an instruction execution manner. A corresponding technical solution can be flexibly selected according to an actual situation, so that implementation and expansion of a "visible and speakable" service are more flexible, and are not limited to a single solution.

Although example embodiments have been described herein with reference to accompanying drawings, it should be understood that the above example embodiments are only illustrative, and not intended to limit the scope of the present disclosure thereto. Various changes and modifications can be made by a person of ordinary skill in the art without departing from the scope and spirit of the present disclosure. All these changes and modifications are intended to be embraced in the scope of the present disclosure as defined in the appended claims.

A person of ordinary skill in the art may notice that the exemplary units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each specific application, but it should not be considered that such an implementation goes beyond the scope of the present disclosure.

In the several embodiments provided in the present disclosure, it should be understood that the disclosed device and method may be implemented in another manner. For example, the described device embodiments are merely schematic. For example, the unit division is merely logical function division and may be other division in actual implementation. For example, multiple units or components may be combined or integrated into another device, or some features may be ignored or not performed.

Numerous specific details are set forth in the specification provided herein. However, it can be understood that, the embodiments of the present disclosure may be practiced without the specific details. In some examples, known methods, structures, and technologies are not disclosed in detail, so as not to mix up understanding on the specification.

Similarly, it should be understood that to simplify the present disclosure and help to understand one or more of disclosure aspects, in the descriptions of the example embodiments of the present disclosure, features of the present disclosure are sometimes grouped into a single embodiment or figure, or descriptions thereof. However, the method of the present disclosure should not be construed as reflecting the following intention: That is, the present disclosure for which protection is sought claims more features than those explicitly recorded in each claim. More definitely, as reflected in the corresponding claims, the inventiveness of the disclosure lies in resolving the corresponding technical problem using features less than all features of a single embodiment disclosed above. Therefore, the claims following the specific implementation are hereby expressly incorporated into the specific implementation, with each claim standing on its own as a separate embodiment of the present disclosure.

A person skilled in the art may understand that, all features disclosed in this specification (including the accompanying claims, abstract and drawings), and all processes or units of any method or device disclosed herein may be combined in any combination, unless features are mutually exclusive. Unless otherwise explicitly stated, each feature disclosed in this specification (including the accompanying claims, abstract and drawings) may be replaced with an alternative feature serving the same, equivalent or similar purpose.

In addition, a person skilled in the art can understand that, although some embodiments herein include some but not other features included in other embodiments, combinations of features of different embodiments are meant to be within the scope of the present disclosure and to form different embodiments. For example, in the claims, any one of the claimed embodiments may be used in any combination.

The component embodiments of the present disclosure may be implemented by using hardware, or may be implemented by using a software module running on one or more processors, or may be implemented by using a combination thereof. A person skilled in the art should understand that in practice, a microprocessor or a digital signal processor (DSP) may be used to implement some or all functions of some modules according to the embodiments of the present disclosure. The present disclosure may further be implemented as part or all of a program (for example, a computer program and a computer program product) that is used to execute the methods described herein. Such a program for implementing the present disclosure may be stored in a computer readable medium, or may have one or more signal forms. Such signals may be downloaded from an Internet website, provided on carrier signals, or provided in any other form.

It should be noted that the above-mentioned embodiments illustrate rather than limit the present disclosure, and a person skilled in the art may devise alternative embodiments without departing from the scope of the appended claims. In the claims, any reference signs placed between parentheses shall not be construed as limiting the claims. The word "include" does not rule out presence of elements or steps not listed in the claims. The word "a/an" or "one" before the element does not rule out presence of multiple such elements. The present disclosure can be implemented by way of hardware including several different elements and an appropriately programmed computer. In the unit claims enumerating the abnormal detection apparatuses of several train traction systems, several of the abnormal detection apparatuses of these train traction systems may be specifically embodied by using a same hardware item. The use of the words such as "first", "second", "third", and the like does not denote any order. These words can be interpreted as names.

The foregoing descriptions are merely specific implementations of the present disclosure or descriptions of the specific implementations, but are not intended to limit the protection scope of the present disclosure. Any variation or replacement readily figured out by a person skilled in the art within the technical scope disclosed in the present disclosure shall fall within the protection scope of the present disclosure. The protection scope of the present disclosure shall be subject to the protection scope of the claims.

## Claims

1. A "visible and speakable" implementation method, comprising:
receiving a voice instruction of a user, and obtaining semantic text information based on the voice instruction;
obtaining a current display interface, and determining interface information of the display interface based on an information type of an application corresponding to the display interface; and
outputting an execution instruction based on the interface information and the semantic text information, so as to perform an operation corresponding to the voice instruction.

2. The method according to claim 1, wherein the determining interface information of the display interface based on an information type of an application corresponding to the display interface comprises:
determining whether the information type of the application corresponding to the display interface is a first-type application or a second-type application, wherein the first-type application is a "visible and speakable" application implemented by using a preset software development kit, and the second-type application is a "visible and speakable" application implemented by using a system service;
obtaining the interface information from the display interface in a first information obtaining manner when the information type of the application corresponding to the display interface is the first-type application; and
obtaining the interface information from the display interface in a second information obtaining manner when the information type of the application corresponding to the display interface is the second-type application.

3. The method according to claim 2, wherein the outputting an execution instruction based on the interface information and the semantic text information, so as to perform an operation corresponding to the voice instruction comprises:
matching the semantic text information against the interface information when the information type of the application corresponding to the display interface is the first-type application, and after the matching succeeds, outputting a first execution instruction, so as to perform the operation corresponding to the voice instruction; and
matching the semantic text information against the interface information when the information type of the application corresponding to the display interface is the second-type application, and after the matching succeeds, outputting a second execution instruction, so as to perform the operation corresponding to the voice instruction.

4. The method according to claim 2, further comprising:
determining, before it is determined whether the information type of the application corresponding to the display interface is the first-type application or the second-type application, whether the application corresponding to the display interface is an application in a preset whitelist; and
determining, after it is determined that the application corresponding to the display interface is an application in the preset whitelist, whether the information type of the application corresponding to the display interface is the first-type application or the second-type application;
wherein an application in the preset whitelist is a "visible and speakable" application.

5. The method according to claim 4, wherein
each application in the preset whitelist comprises a label, and the label is configured to identify that the application is the first-type application or the second-type application; and
the determining whether the information type of the application corresponding to the display interface is a first-type application or a second-type application comprises: determining, based on the label of each application in the preset whitelist, whether the information type of the application corresponding to the display interface is the first-type application or the second-type application.

6. The method according to claim 4 or 5, wherein the preset whitelist is deployed in a cloud or locally, and the preset whitelist is editable.

7. The method according to claim 3, wherein
the obtaining the interface information from the display interface in a first information obtaining manner comprises: obtaining the interface information of the display interface by using a software development kit of the application corresponding to the display interface; and
the outputting a first execution instruction, so as to perform the operation corresponding to the voice instruction comprises: outputting an execution instruction to the application corresponding to the display interface, so that the application corresponding to the display interface performs the operation corresponding to the voice instruction.

8. The method according to claim 3, wherein
the obtaining the interface information from the display interface in a second information obtaining manner comprises: obtaining the interface information of the display interface by using an accessible auxiliary service of a system service in which the display interface is located; and
the outputting a second execution instruction, so as to perform the operation corresponding to the voice instruction comprises: outputting an execution instruction to the accessible auxiliary service of the system service in which the display interface is located, so that the accessible auxiliary service performs the operation corresponding to the voice instruction.

9. The method according to any one of claims 2 to 5, further comprising:
determining, when the display interface presents interfaces of at least two applications, for an information type of each of the at least two applications whether the application is the first-type application or the second-type application.

10. A "visible and speakable" implementation apparatus, comprising a processor and a memory, the memory storing a computer program run by the processor, and when the computer program is run by the processor, the processor performing the "visible and speakable" implementation method according to any one of claims 1 to 9.

11. A vehicle, comprising the "visible and speakable" implementation apparatus according to claim 10.

12. A storage medium, storing a computer program run by a processor, and when the computer program is run by the processor, the processor performing the "visible and speakable" implementation method according to any one of claims 1 to 9.
